# EUROPÄISCHE PATENTSCHRIFT

(11) **EP 1 816 375 B1**
(45) Veröffentlichungstag und Bekanntmachung des Hinweises auf die Patenterteilung: **19.12.2012**
(21) Anmeldenummer: 07100736.3
(22) Anmeldetag: 18.01.2007
(51) Int. Cl.: F16H 57/029, A01D 34/30, A01D 69/06, F16H 21/36

(54) **Getriebeanordnung**
Gear assembly
Agencement d'engrenage

(30) Priorität: 07.02.2006 DE 102006005354
(43) Veröffentlichungstag der Anmeldung: 08.08.2007
(73) Patentinhaber: Deere & Company, Moline, IL 61265-8098 (US)
(72) Erfinder: Gil Martinez, Monica, 28100 Madrid (ES)
(74) Vertreter: Holst, Sönke

(56) Entgegenhaltungen:
- CH-A- 347 378
- DE-A1- 4 406 959
- US-B1- 6 273 214
- G. NIEMANN: "Maschinenelemente" 1965, SPRINGER VERLAG , BERLIN, HEIDELBERG, NEW YORK 2 , XP002480946 * Seite 68 *

## Beschreibung

Die Erfindung betrifft eine Getriebeanordnung, mit einem Getriebegehäuse, einem von dem Getriebegehäuse umschlossenen Getrieberaum, einer in dem Getriebegehäuse gelagerten ersten Welle, einem in der ersten Welle mit seinem Querschnittsschwerpunkt exzentrisch zur Rotationsachse ausgebildeten Hohlraum, einer in dem Hohlraum der ersten Welle drehbar gelagerten zweiten Welle, die wenigstens einen Verzahnungsbereich und einen axial aus dem Hohlraum der ersten Welle herausragenden Wellenendbereich aufweist, und einer im Getriebegehäuse gelagerten dritten Welle, deren Rotationsachse mit einer auf der Rotationsachse der ersten Welle liegenden Ebene einen Winkel einschließt.

Im Stand der Technik sind Getriebeanordnungen bekannt, die zueinander winklig angeordnete Getriebeübersetzungen mit ineinander angeordneten Getriebewellen aufweisen. Getriebeanordnungen mit ineinander angeordneten Getriebewellen stellen unter anderem eine kompakte Bauweise und eine Möglichkeit zur Realisierung von Exzentertrieben dar. Getriebeanordnungen mit Exzentertrieb werden beispielsweise in der Landwirtschaft zum Antrieb von Schneidwerken an Mähvorsätzen für Mähdrescher eingesetzt.

Eine derartige Getriebeanordnung wird beispielsweise in der US 6,273,214 B1 offenbart. Die Getriebeanordnung weist ein Getriebegehäuse auf, in dem eine Getriebewelle gelagert ist, welche über eine Winkelgetriebestufe antreibbar ist und einen exzentrisch gelegenen Hohlraum aufweist. In dem Hohlraum ist eine Exzenterwelle mit einem daran angeschlossenen Zapfen gelagert. Die offenbarte Getriebeanordnung wird mit Schmierfett betrieben. Um eine ausreichend hohe Versorgung des Hohlraums mit Schmierfett zu gewährleisten ist ein Kanal vorgesehen, der einen Bereich des Getriebegehäuses mit dem Hohlraum der Welle verbindet. Durch den Kanal kann das in dem Getrieberaum deponierte Schmierfett in den Hohlraum gelangen. Als schwierig erweist sich hierbei die Abdichtung des Hohlraums gegenüber dem Getriebegehäuse bzw. die Abdichtung der Exzenterwelle gegenüber der Getriebewelle, was eine aufwändige Konstruktion hinsichtlich der axialen Sicherung der Exzenterwelle und einen damit verbundenen hohen Montageaufwand erfordert. Dabei wirkt sich ferner nachteilig aus, dass das Schmierfett nach relativ wenigen Betriebsstunden durch die Öffnungen des Getriebegehäuses bzw. der Getriebewelle entweichen kann und ein Nachfüllen von Schmierfett mit relativ kurzen Wartungsintervallen verbunden ist. Ferner ist es schwierig zu überprüfen, ob sich noch ausreichend viel Schmierfett im Inneren der Getriebeanordnung befindet.

Die der Erfindung zugrunde liegende Aufgabe wird darin gesehen, eine Getriebeanordnung der eingangs genannten Art anzugeben, durch welche eines oder mehrere der vorgenannten Probleme überwunden werden.

Die Aufgabe wird erfindungsgemäß durch die Lehre des Patentanspruchs 1 gelöst. Vorteilhafte Ausgestaltungen und Weiterbildungen der Erfindung gehen aus den Unteransprüchen hervor.

Erfindungsgemäß wird eine Getriebeanordnung der eingangs genannten Art derart ausgebildet, dass die Getriebeanordnung eine an der ersten Welle drehfest befestigte Platte zur axialen Fixierung der zweiten Welle aufweist, wobei in der Platte eine Öffnung für den Wellenendbereich vorgesehen ist, und dass Öffnungen des Getriebegehäuses sowie die Öffnung der Platte derart mit Schmiermittel abdichtenden Dichtmitteln versehen sind, dass zwischen Getriebegehäuse und erster und dritter Welle bzw. zwischen Platte und zweiter Welle ein Austritt eines sich im Getriebegehäuse befindlichen Schmiermittels verhindert wird. Dadurch, dass zur axialen Fixierung der zweiten Welle eine Platte vorgesehen ist, können zum einen der Montageaufwand erheblich reduziert und schlecht zugängliche Sprengringe vermieden werden, zum anderen kann in der Öffnung, ein Dichtmittel platziert werden, welches die zweite Welle nach außen hin abdichtet, so dass kein Schmiermittel durch einen Bewegungsspalt zwischen zweiter und erster Welle entweichen kann. Die weiteren Dichtmittel an den Öffnungen des Getriebegehäuses zum Austritt der ersten und zweiten Welle dichten das Getriebegehäuse entsprechend gleichwirkend ab. Insgesamt vermeiden die Dichtmittel Leckagen von Schmiermittel, die bei im Stand der Technik bekannten Getriebeanordnungen kurze Wartungsintervalle erfordern. Mit einer erfindungsgemäßen Getriebeanordnung können ein Schmiermittelverlust durch Leckagen und der Montageaufwand erheblich reduziert und die Wartungsintervalle maßgeblich verlängert werden.

In einer bevorzugten Ausgestaltung der Erfindung wird die Platte stirnseitig mit einem Wellenendbereich der ersten Welle verschraubt. Durch über dem Umfang am Rand der Stirnfläche der ersten Welle verteilte Gewindebohrungen, vorzugsweise drei, kann die Platte entsprechend leicht montiert bzw. demontiert werden. Ferner kann zwischen der Stirnfläche der ersten Welle und der Platte ein weiteres Dichtmittel vorgesehen sein, so dass auch hier ein Austreten von Schmiermittel verhindert wird. Die Platte dient neben der Aufnahme eines Dichtmittels für die zweite Welle zur Abdichtung auch dazu, den Bewegungsspalt gegen eintretenden Schmutz zu schützen.

Vorzugsweise ist das Getriebegehäuse mit einem oder mehreren entlang der Rotationsachse der ersten Welle angeordneten Verschlussstopfen versehen. Die Verschlussstopfen dienen dazu, die Getriebeanordnung mit Schmiermittel zu füllen, die Menge des noch vorhandenen Schmiermittels zu überprüfen oder auch um eine Ablassöffnung für Schmiermittel zu schaffen. So kann ein relativ weit oben angeordneter Verschlussstopfen zum Befüllen mit Schmiermittel dienen, hingegen ein relativ dazu weiter unten angebrachter Verschlussstopfen geöffnet werden kann, um ein Schmiermittelaustritt zu erwirken bzw. um zu überprüfen ob Schmiermittel aus der Öffnung austritt. Tritt kein Schmiermittel aus der Öffnung des Verschlussstopfens aus, ist nicht mehr genügend Schmiermittel vorhanden und muss nachgefüllt werden. Dadurch kann eine aufwändige Demontage von Teilen bei der Wartung vermieden werden. Alternativ kann an der Gehäusewandung auch ein Messstab angeordnet sein, der in das Innere des Gehäuses ragt.

Die Dichtmittel sind vorzugsweise als Wellendichtringe ausgebildet, beispielsweise als Simmerringe, welche in dem Getriebegehäuse oder in dem Hohlraum der ersten Welle gefasste und durch ringförmige Schraubenzugfeder an die entsprechende Welle angedrückte Dichtmanschetten aus ölbeständigem Kunstgummi darstellen und zur Abdichtung einer Öffnung für Wellen gegen Austritt von Schmiermitteln oder Eintritt von Staub dienen. Es können jedoch auch andere Dichtmittel zum Einsatz kommen, die eine drehende Welle gegenüber einer Öffnung abdichten.

Eine erfindungsgemäße Getriebeanordnung besitzt den Vorteil, dass als Schmiermittel Getriebeöl verwendet werden kann, so dass die gesamte Getriebeanordnung mit Getriebeöl betreibbar ist. Getriebeöl weist gegenüber Schmierfett vorteilhaftere Temperatureigenschaften auf. Ferner wird durch die Verwendung von Getriebeöl zur Schmierung der Getriebeanordnung der Wartungsprozess vereinfacht, da in Verbindung mit den Verschlussstopfen ein Auffüllen, Ölstandmessen und Ablassen des Getriebeöls ohne Aufwand durchführbar ist. Durch die erfindungsgemäße Anordnung von entsprechenden Wellendichtringen oder anderen Dichtmitteln wird ein Austritt von Getriebeöl vermieden. Hierbei sei darauf hingewiesen, dass auch andere Arten von Schmiermitteln, insbesondere Schmierfett, zum Betreiben der Getriebeanordnung einsetzbar sind.

Die zur Fixierung der zweiten Welle und zur Aufnahme eines Dichtmittels zum Abdichten der zweiten Welle angeordnete Platte ist vorzugsweise derart angeordnet, dass ein im ersten Lagerbereich der zweiten Welle angeordnetes Lager durch die Platte an der ersten Welle axial fixiert wird. Dadurch kann auf schwer zugängliche Sprengringe zur axialen Fixierung des Lagers der zweiten Welle oder auf andere aufwändige Befestigungsmaßnahmen für das Lager der zweiten Welle verzichtet werden. Durch Andrücken der Platte wird das sich im Lagerbereich der zweiten Welle befindliche Lager an einen Absatz der ersten Welle gedrückt und gehalten bzw. fixiert.

In dem Hohlraum der ersten Welle ist die zweite Welle drehbar gelagert, wobei die zweite Welle vorzugsweise einteilig ausgebildet ist. Dadurch, dass die zweite Welle einteilig und insbesondere der Wellenendbereich als Teil der Welle ausgebildet ist, werden Verbindungsteile eingespart, die Schadensanfälligkeit reduziert und der Fertigungsprozess und die Montage vereinfacht. Vorzugsweise ist der zweite Lagerbereich zwischen dem Verzahnungsbereich und dem Wellenendbereich angeordnet. Die Lagerung der zweiten Welle kann an zwei im Hohlraum der ersten Welle axial beabstandeten Lagersitzen erfolgen. Vorzugsweise ist der erste Lagerbereich der zweiten Welle mit einem Wälzlager, insbesondere Nadellager, bestückt, wobei der erste Lagersitz vorzugsweise im Bereich der Hohlraumöffnung des Kanals im Getriebeinneren der ersten Welle angeordnet ist. Durch die relativ geringen Abmessungen eines Nadellagers kann eine kompakte Bauweise erzielt werden. Der zweite Lagersitz für ein zweites Wälzlager ist vorzugsweise an einer außen an der ersten Welle gelegenen Hohlraumöffnung angeordnet. Das zweite Wälzlager ist beispielsweise als Kugellager ausgebildet und nimmt den zweiten Lagerbereich der zweiten Welle auf. Selbstverständlich sind auch andere Kombinationen mit anderen Arten von Wälzlagern denkbar. Des Weiteren ist es denkbar, die Lagerbereiche auch direkt nebeneinander anzuordnen, so dass sowohl der Wellenendbereich als auch der Verzahnungsbereich frei gelagert sind. Vorzugsweise ist die zweite Welle derart ausgebildet, dass die maximalen Außendurchmesser der zweiten Welle in den einzelnen Bereichen zum Wellenendbereich hin ansteigen. Dadurch wird ein Wellenendbereich mit einem relativ großen Durchmesser erzielt, wobei ein Wellenabsatz zum Wellenendbereich als axiale Sicherung für das zweite Wälzlager dient. Des Weiteren wird dadurch eine einfache Vormontage des zweiten Wälzlagers auf der Welle ermöglicht, so dass das Einsetzen der zweiten Welle in einem Arbeitsschritt erfolgen kann und insbesondere die Montagezeiten bzw. die Wartungszeiten für die Getriebeanordnung verkürzt werden.

Der zwischen dem wenigstens einen Lagerbereich und dem Wellenendbereich ausgebildete Verzahnungsbereich steht mit einer mit dem Getriebegehäuse drehfest verbundenen Verzahnung, vorzugsweise einem Hohlrad, im Eingriff. Dazu ist der Hohlraum der ersten Welle mit einer radial ausgerichteten Öffnung versehen, die sich über einen Teil des Umfangs der ersten Welle erstreckt und den Verzahnungsbereich teilweise freilegt. Durch den Eingriff des Verzahnungsbereichs mit der drehfest mit dem Getriebegehäuse verbundenen Verzahnung kann eine Eigenrotation der zweiten Welle im Hohlraum der ersten Welle erzeugt werden, so dass eine Überlagerung einer exzentrischen Bewegung der zweiten Welle um die Rotationsachse der ersten Welle mit einer Rotationsbewegung der zweiten Welle um die eigene Rotationsachse erzielbar ist.

Die Getriebeanordnung weist eine im Getriebegehäuse gelagerte dritte Welle auf, deren Rotationsachse mit einer auf der Rotationsachse der ersten Welle liegenden Ebene einen Winkel einschließt. Vorzugsweise ist die dritte Welle derart angeordnet, dass die Rotationsachsen der ersten und dritten Welle einen Schnittpunkt aufweisen und somit auf einer gemeinsamen Ebene liegen und einen Winkel von etwa 90° einschließen. Es ist aber auch möglich, die dritte Welle versetzt anzuordnen, so dass die Rotationsachsen der ersten und dritten Welle nicht auf einer gemeinsamen Ebene liegen. Ferner ist es möglich die Wellen auch in einem größeren oder in einem kleineren Winkel zueinander anzuordnen.

Die dritte Welle ist vorzugsweise mit einem ersten Lager axial lose gelagert, wobei das erste Lager der dritten Welle als Rollenlager, insbesondere Nadellager, ausgebildet ist. Hierbei ist es auch möglich, andere Arten von Wälzlager einzusetzen, beispielsweise ein Kugellager, das auf der Welle oder in einem Lagersitz in beide Richtungen axial fixiert und die Welle axial lose gelagert ist. Die Verwendung eines Nadellagers als Loslager hat den Vorteil, dass die Welle sehr kompakt und einfach gestaltet werden kann.

Die dritte Welle ist vorzugsweise mit einem zweiten Lager in beide Richtungen axial am Getriebegehäuse fixiert. Vorzugsweise ist das zweite Lager der dritten Welle als Wälzlager, insbesondere Kugellager, ausgebildet, welches durch einen Absatz am Getriebegehäuse nach innen zum Getriebegehäuse und mit einem Sprengring am Getriebegehäuse nach außen zum Getriebegehäuse axial fixiert ist. Durch die Fixierung in Außenrichtung des Getriebegehäuses mittels eines Sprengrings ist es möglich, die dritte Welle entsprechend vorzumontieren und in einem Arbeitsschritt in das Getriebegehäuse einzusetzen. Dadurch können Montage- und Wartungszeiten reduziert werden.

Die Getriebeanordnung weist ein auf der dritten Welle angeordnetes Zahnrad auf, welches mit einem Sprengring auf der Welle nur in einer Richtung axial fixiert ist. Durch die Anordnung eines Sprengrings zur Befestigung des Zahnrads kann ein aufwendig anzufertigender Absatz auf der Welle vermieden werden, wodurch die gesamte Welle einfacher gestaltbar ist und damit auch die Fertigungskosten reduziert werden können.

Ein auf der ersten Welle befestigtes Zahnrad steht mit dem auf der dritten Welle befestigten Zahnrad in Eingriff, wobei das Zahnrad der ersten Welle in einem ersten Lager der ersten Welle radial zur Rotationsachse der ersten Welle fixiert ist und eine Axialkraft in Bezug auf die dritte Welle ausübt.

Durch die Axialkraft und den am Getriebegehäuse angeordneten Sprengring für das zweite Lager der dritten Welle, ist die dritte Welle axial in beide Richtungen fixiert.

Durch eine an dem Getriebegehäuse, beispielsweise an einem Getriebegehäusedeckel, vorgesehene Entlüftungseinrichtung, beispielsweise eine Entlüftungsöffnung, ein Entlüftungsröhrchen, ein Entlüftungs- oder Überdruckventil oder dergleichen, wird der Getrieberaum mit der Umgebung des Getriebegehäuses verbunden. Durch die Verbindung mit der Umgebung kann ein Druckausgleich zwischen Getrieberaum und Umgebung stattfinden, so dass auch Betriebstemperaturen reduziert und die Laufdauer erhöht werden.

Die Getriebeanordnung weist vorzugsweise einen Zapfen auf, der sich axial und exzentrisch zur Rotationsachse der zweiten Welle aus dem Wellenendbereich erstreckt. Dabei kann der Zapfen einteilig mit der zweiten Welle oder über Verbindungsmittel mit der zweiten Welle verbunden sein. Durch Rotation der ersten und zweiten Welle erfolgt eine Überlagerung von einer exzentrischen Rotationsbewegung der Rotationsachse der zweiten Welle um die Rotationsachse der ersten Welle und von einer zusätzlichen exzentrischen Rotationsbewegung des Zapfens um die Rotationsachse der zweiten Welle. Der Zapfen dient dabei zur Übertragung der überlagerten Exzenterbewegungen in entsprechende lineare Bewegungen auf eine anzutreibende Vorrichtung, beispielsweise einem Schneidwerk.

Zur Übertragung der Rotationsbewegungen ist der Zapfen vorzugsweise mit einem Wälzlager versehen, welches von einer mit einer anzutreibenden Vorrichtung verbundenen Lagerpfanne verbindbar ist. Je nach Rotationsdrehzahl des Zapfens bzw. der Wellen und der zu übertragenden Kräfte kann jedoch auch anstelle des Wälzlagers ein Gleitlager, beispielsweise in Form einer Gleitbuchse, vorgesehen sein. Das Wälzlager des Zapfens kann als Rollenlager ausgebildet sein. Das Wälzlager wird von einer Buchse aufgenommen, die vorzugsweise ringförmig ausgebildet ist und eine sphärisch gewölbt ausgebildete Außenfläche aufweist. Die Aufnahme des Wälzlagers durch die Buchse erfolgt vorzugsweise über einen Laufring des Wälzlagers, der in die Innenfläche der Buchse eingepasst ist. Die sphärisch gewölbt ausgebildete Außenfläche wird wiederum von einer Lagerpfanne aufgenommen, welche mit einer kongruent zur Außenfläche der Buchse ausgebildeten Innenfläche ausgebildet ist. Die sphärisch ausgebildeten Flächen erlauben eine Relativbewegung zueinander, so dass sich zwischen Zapfen und anzutreibender Vorrichtung bzw. zwischen der Zapfenlängsachse und der Rotationssymmetrieachse der Lagerpfanne ein Neigungswinkel einstellen kann, wodurch Toleranzprobleme bei der Übertragung von Bewegungen überwunden werden können. Ferner ist es auch möglich, das Wälzlager als Kugellager auszubilden, dessen äußerer Laufring von einer entsprechenden Buchse aufgenommen wird. Des Weiteren kann das Wälzlager für den Zapfen auch als Nadellager ausgebildet sein. Dabei wird vorzugsweise ein Nadellager verwendet, welches einen äußeren Laufring mit einer sphärisch gewölbt ausgebildeten Außenfläche umfasst. Auch ein andersartiges Wälzlager, beispielsweise ein Kugel- oder Rollenlager, kann mit einem derartig geformten äußeren Laufring versehen sein.

Die Buchse, die den äußeren Laufring aufnimmt, sowie die Lagerpfanne, die die Buchse umgibt, sind über den Umfang geschlossen ausgebildet. An der Lagerpfanne sind Aussparungen oder Öffnungen vorgesehen, die in radialer Richtung gegenüberliegen und sich axial zur Rotationssymmetrieachse der Lagerpfanne entlang der Innenfläche der Lagerpfanne erstrecken. Die Öffnungen sind derart bemessen, dass zum Aufnehmen der Buchse in die Lagerpfanne, die Buchse quer zu ihrer Rotationssymmetrieachse in ihrer Breite einführbar ist und durch Verschwenken um 90° die Außenfläche der Buchse zur Innenfläche der Lagerpfanne ausgerichtet und in Lagerstellung gebracht werden kann. Bisherige Ausführungen weisen eine auf dem Umfang geöffnete bzw. geschlitzte Buchse vor, meist aus Kunststoff, die von einer geöffnet ausgebildeten Lagerpfanne aufgenommen wird. Durch eine Spanneinrichtung an der Lagerpfanne wird die geschlitzte Buchse um das Wälzlager des Zapfens gespannt. Dadurch, dass die Buchse und die Lagerpfanne über den Umfang geschlossen ausgebildet sind, kann zum einen die Verbindung zwischen Wälzlager und Buchse bzw. Lagerpfanne ohne aufwändige Spannvorrichtung erfolgen, zum anderen können starre und verschleißfestere Materialien verwendet und damit die Wartungsintervalle verlängert bzw. die Schadensanfälligkeit reduziert werden. Ferner ergibt sich dadurch ein geringeres Lagerspiel. Eine Getriebeanordnung mit einem Wälzlager für den Zapfen unter Verwendung einer Buchse und einer Lagerpfanne, die in der vorangehend beschriebenen Art geschlossen ausgebildet sind und sphärische Flächen aufweisen, kann als eigenständige Erfindung angesehen werden.

Die Lagerpfanne für das Wälzlager des Zapfens ist vorzugsweise mit Verbindungsmitteln, insbesondere Verbindungsmittel zur Verbindung mit einem Schneidwerk, verbunden. Beispielsweise ist die Lagerpfanne direkt mit einer Führungsstange oder einer Antriebsstange verbunden, durch die eine Schneidbewegung hervorgerufen wird. Die Verbindung zur Lagerpfanne kann beispielsweise durch Verschweißen oder Verschrauben erfolgen. Ferner ist es auch möglich, die Lagerpfanne in einem Stück mit dem Verbindungsmittel auszubilden, beispielsweise zu schmieden oder zu gießen.

Anhand der Zeichnung, die ein Ausführungsbeispiel der Erfindung zeigt, werden nachfolgend die Erfindung sowie Vorteile und vorteilhafte Weiterbildungen und Ausgestaltungen der Erfindung näher beschrieben und erläutert.

Es zeigt:
- Fig. 1: eine Querschnittsansicht einer erfindungsgemäßen Getriebeanordnung,
- Fig. 2: eine Seitenansicht der Getriebeanordnung aus Figur 1,
- Fig. 3: eine perspektivische Seitenansicht der Getriebeanordnung aus Figur 1,
- Fig. 4: eine Detailansicht einer zweiten Welle der Getriebeanordnung aus Figur 1,
- Fig. 5: eine Draufsicht eines Wellenendbereichs der zweiten Welle aus Figur 4,
- Fig. 6: eine Seitenansicht einer Zapfenanordnung der Getriebeanordnung aus Figur 1,
- Fig. 7: eine Draufsicht der Zapfenanordnung aus Figur 6,
- Fig. 8: eine Draufsicht einer Platte der Getriebeanordnung aus Figur 1 mit Öffnung für die zweite Welle,
- Fig. 9: eine Querschnittsansicht der Platte aus Figur 8 und
- Fig. 10: eine Querschnittsansicht einer Lageranordnung für einen Zapfen der Getriebeanordnung aus Figur 1,

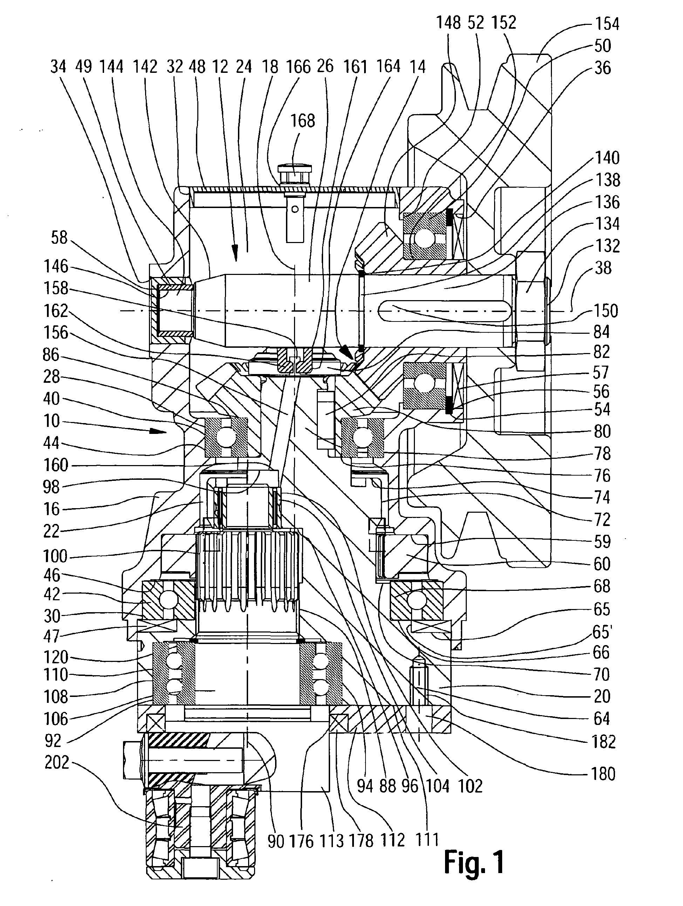

Die Figuren 1 bis 3 zeigen eine erfindungsgemäße Getriebeanordnung 10 mit einem einen Getrieberaum 12 eines Winkelgetriebes 14 umgebenden Getriebegehäuse 16. Das Getriebegehäuse 16 erstreckt sich im Wesentlichen rotationssymmetrisch entlang der Rotationsachse 18 einer ersten Welle 20, wobei die Rotationsachse 18 eine Längsrichtung der Getriebeanordnung 10 definiert. Der Getrieberaum 12 unterteilt sich in einen ersten Getrieberaumbereich 22, der im Wesentlichen die erste Welle 20 umgibt und in einen zweiten Getrieberaumbereich 24, der im Wesentlichen eine dritte, quer zur Längsrichtung angeordnete Welle 26 umgibt. Die Getrieberaumbereiche 22, 24 sind in Längsrichtung aneinandergrenzend ausgebildet und weisen einen gemeinsamen zylindrischen Übergangsbereich 28 auf, der in etwa mittig zur Längsausdehnung des Getriebegehäuses 16 und koaxial zur Rotationsachse 18 angeordnet ist und durch welchen eine axiale Verbindung der Getrieberaumbereiche 22, 24 definiert wird.

Das Getriebegehäuse 16 weist im ersten Getrieberaumbereich 22 eine erste zylindrische Öffnung 30 auf, die koaxial zur Rotationsachse 18 ausgerichtet ist und den ersten Getrieberaumbereich 22 axial nach außen öffnet. Ferner weist das Getriebegehäuse 16 im zweiten Getrieberaumbereich 24 eine zweite, dritte und vierte zylindrische Öffnung 32, 34, 36 auf. Die zweite Öffnung 32 ist koaxial zur Rotationsachse 18 ausgerichtet und öffnet den zweiten Getrieberaumbereich 24 axial nach außen. Die dritte und vierte Öffnung 34, 36 sind beidseitig der Rotationsachse 18 und koaxial zu einer quer zur Rotationsachse 18 angeordneten Rotationsachse 38 der dritten Welle 26 angeordnet.

In dem gemeinsamen Übergangsbereich 28 ist ein erstes Lager 40 und in der ersten Öffnung 30 im ersten Getrieberaumbereich 22 ein zweites Lager 42 für die erste Welle 20 angeordnet. An dem gemeinsamen Übergangsbereich 28 ist ein Absatz 44 eingeformt, der das Lager 40 in Richtung der ersten Öffnung 30 axial fixiert. An der ersten Öffnung 30 ist ein Absatz 46 eingeformt, der das Lager 42 in Richtung des gemeinsamen Übergangsbereichs 28 axial fixiert. Die Lager 40, 42 sind vorzugsweise als Wälzlager ausgebildet und in Figur 1 beispielhaft als Kugellager dargestellt. Durch die Lager 40, 42 wird die erste Welle aufgenommen und drehbar im Getriebegehäuse 16 bzw. im ersten Getrieberaumbereich 22 gelagert. Ferner ist an der ersten Öffnung 30, angrenzend zum zweiten Lager 42, nach außen hin ein erster Wellendichtring 47, beispielsweise ein Simmerring, angeordnet, der den Bewegungsspalt zwischen der ersten Öffnung 30 und der ersten Welle 20 abdichtet.

Im zweiten Getrieberaumbereich 24 ist an der zweiten Öffnung 32 ein Gehäusedeckel 48 vorgesehen, der den zweiten Getrieberaum 24 zur Umgebung hin axial begrenzt.

Im zweiten Getrieberaumbereich 24 ist in der dritten Öffnung 34 ein erstes Lager 49 und in der vierten Öffnung 36 ein zweites Lager 50 für die dritte Welle 26 angeordnet. An der vierten Öffnung 36 ist ein Absatz 52 eingeformt, der das Lager 50 in Richtung der dritten Öffnung 34 axial fixiert. Ferner ist an der vierten Öffnung 36 eine mit einem Sprengring 54 versehene Ringnut 56 eingeformt, wodurch das Lager 50 auch in die entgegengesetzte Richtung axial fixiert wird. Das Lager 49 ist frei gelagert in der dritten Öffnung 34 angeordnet. Die Lager 49, 50 sind vorzugsweise als Wälzlager ausgebildet, wobei für das Lager 49 ein Rollenlager in Form eines Nadellagers verwendet wird, wie in Figur 1 zu sehen ist. Das Lager 50 ist in der dargestellten Form als Kugellager ausgebildet, wobei hier auch ein Rollenlager einsetzbar ist. Durch die Lager 49, 50 wird die dritte Welle aufgenommen und drehbar im Getriebegehäuse 16 bzw. im zweiten Getrieberaumbereich 24 gelagert. Ferner ist an der vierten Öffnung 36, angrenzend zum Sprengring 54, nach außen hin ein zweiter Wellendichtring 57, beispielsweise ein Simmerring, angeordnet, der den Bewegungsspalt zwischen der vierten Öffnung 36 und der dritten Welle 26 abdichtet. Eine an der dritten Öffnung 34 vorgesehene Lagerhülse 58 dichtet die dritte Öffnung 34 nach außen hin ab.

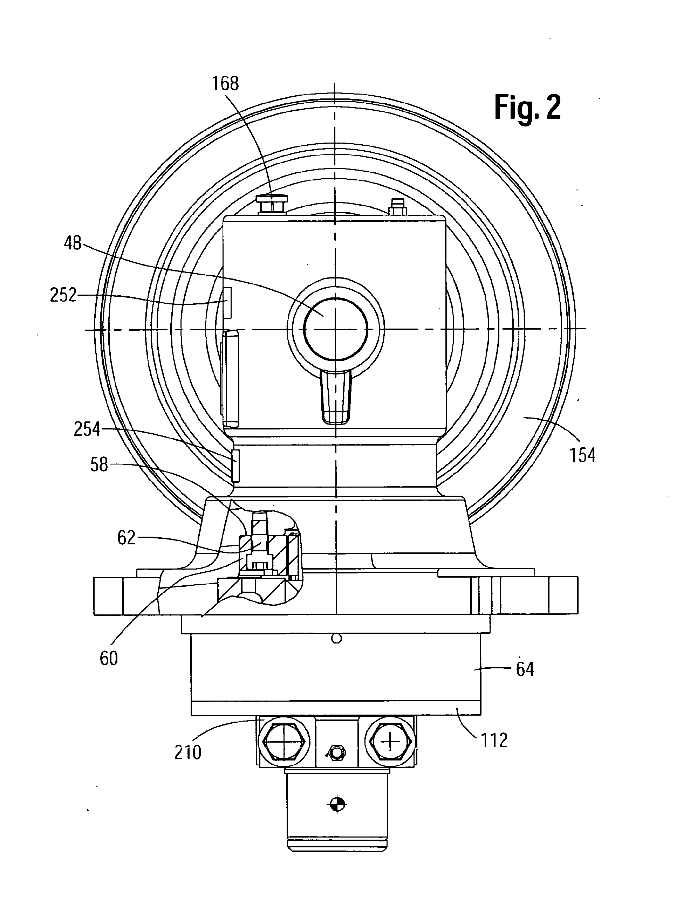

Des Weiteren ist im ersten Getrieberaumbereich 22 zwischen den Lagern 40, 42 ein weiterer Absatz 59 vorgesehen, an dem ein Hohlrad 60 befestigt ist. Das Hohlrad 60 wird mittels auf dem Umfang des Absatzes 59 verteilte Schrauben 62 (siehe Figur 2) mit dem Getriebegehäuse 16 verschraubt.

Die erste Welle 20 erstreckt sich durch den gesamten ersten Getrieberaumbereich 22 und weist einen aus der ersten Öffnung 30 herausragenden Wellenendbereich 64 auf, der im Wesentlichen den gesamten Durchmesser der ersten Öffnung 30 abdeckt. Ausgehend von dem Wellenendbereich 64 ist ein erster Wellenabsatz 65 ausgebildet, dem sich ein Wellendichtringbereich 65' für den ersten Wellendichtring 47 anschließt. Ausgehend von dem Wellenendbereich 64 ist ein zweiter Wellenabsatz 66 ausgebildet, dem sich ein Lagerbereich 68 für das zweite Lager 42 anschließt. An den Lagerbereich 68 angrenzend ist ein dritter Wellenabsatz 70 ausgebildet, dem sich ein mittlerer Wellenbereich 72 anschließt. Der mittlere Wellenbereich 72 mündet in einen vierten Wellenabsatz 74. Dem vierten Wellenabsatz 74 folgt ein fünfter Wellenabsatz 76, an den sich ein Wellenzapfen 78 anschließt, wobei sich der Wellenzapfen 78 durch den gemeinsamen Übergangsbereich 28 in den zweiten Getrieberaumbereich 24 erstreckt. Auf dem Wellenzapfen 78 ist ein erstes Kegelrad 80 gelagert, welches über eine Feder-Nut-Verbindung 82 drehfest mit der ersten Welle 20 bzw. mit dem Wellenzapfen 78 verbunden ist. Der Wellenzapfen 78 ist mit einer Wellenmutter 84 versehen. Auf dem ersten Kegelrad 80 ist ein Lagerbereich 86 ausgebildet, durch den die erste Welle 20 im ersten Lager 40 aufgenommen wird.

Die erste Welle 20 ist mit einem Hohlraum 88 versehen. Der Hohlraum 88 ist im Wesentlichen zylindrisch um eine Rotationsachse 90 ausgebildet, wobei die Rotationsachse 90 parallel zur Rotationsachse 18 und exzentrisch zur ersten Welle 20 angeordnet ist. Der Hohlraum 88 weist eine zylindrische Öffnung 92 auf, die den Hohlraum 88 zum Wellenende 64 der ersten Welle 20 hin axial zur Rotationsachse 90 öffnet. Ausgehend von der Öffnung 92 weist der Hohlraum 88 einen ersten und einen zweiten Absatz 94, 96 auf und mündet in einen Hohlraumboden 98. Zwischen dem ersten und dem zweiten Absatz 94, 96 ist der Hohlraum 88 auf Höhe des Hohlrades 60 mit einer Öffnung 100 versehen, die sich radial und axial zur Rotationsachse 90 entlang der Hohlraumwand erstreckt und einen Teilbereich der Hohlraumwand zum Hohlrad 60 hin öffnet.

Zwischen dem zweiten Absatz 96 des Hohlraums 88 und dem Hohlraumboden 98 ist ein erster Lagersitz 102 zur Aufnahme eines ersten Lagers 104 für eine zweite Welle 106 ausgebildet. Zwischen der Öffnung 92 des Hohlraums 88 und dem ersten Absatz 94 ist ein zweiter Lagersitz 108 zur Aufnahme eines zweiten Lagers 110 für die zweite Welle 106 ausgebildet. Das zweite Lager 110 ist mittels einer auf die Stirnfläche 111 des Wellenendbereichs 64 geschraubte Platte 112 axial gesichert, indem der äußere Lagerring des zweiten Lagers 110 gegen den ersten Absatz 94 gedrückt wird.

Das erste und zweite Lager 104, 110 für die zweite Welle 106 sind als Wälzlager ausgebildet, wobei für das erste Lager 104 ein Rollenlager in Form eines Nadellagers und für das zweite Lager 110 ein Kugellager vorgesehen ist, wie in Figur 1 dargestellt ist.

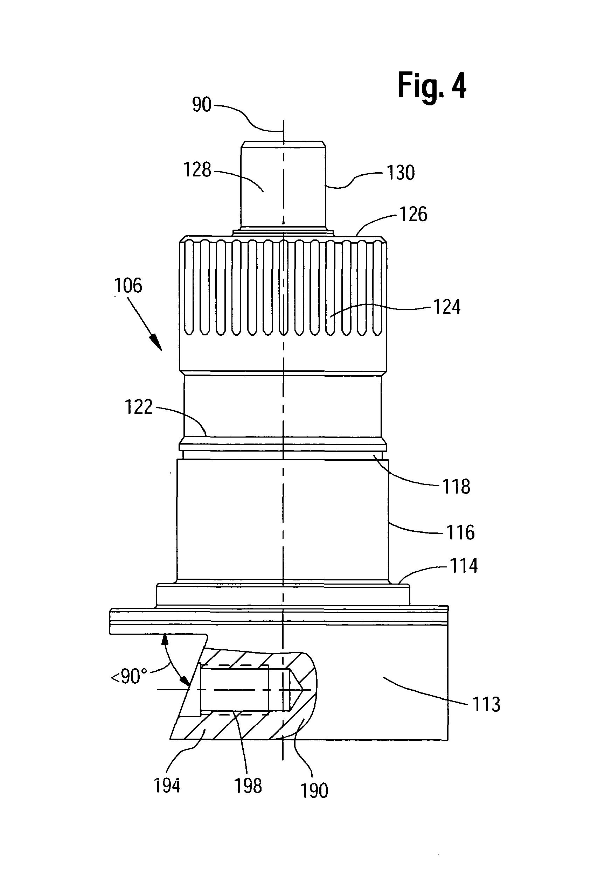

Die zweite Welle 106 erstreckt sich durch den gesamten Hohlraum 88 der ersten Welle 20 und weist einen aus der ersten Öffnung 92 der ersten Welle 20 herausragenden Wellenendbereich 113 auf (siehe Figur 4). Ausgehend von dem Wellenendbereich 113 ist die zweite Welle 106 mit einem ersten Wellenabsatz 114 versehen, dem sich ein Lagerbereich 116 für das zweite Lager 110 anschließt. An den Lagerbereich 116 angrenzend ist eine Ringnut 118 ausgebildet, die einen Sprengring 120 (in Figur 1 dargestellt) aufnimmt. Der Ringnut 118 schließt sich ein zweiter Wellenabsatz 122 an, der in einen Verzahnungsbereich 124 der zweiten Welle 106 mündet. Der Verzahnungsbereich 124 der zweiten Welle 106 erstreckt sich axial zwischen den Absätzen 94, 96 des Hohlraums 88 und endet in einem dritten Wellenabsatz 126. Dem dritten Wellenabsatz 126 schließt sich ein Wellenzapfen 128 an, auf dem ein Lagerbereich 130 für das erste Lager 104 ausgebildet ist.

Die dritte Welle 26 erstreckt sich durch den gesamten zweiten Getrieberaumbereich 24 und weist einen aus der vierten Öffnung 36 herausragenden Wellenendbereich 132 auf (siehe Figur 1). Der Wellenendbereich 132 ist mit einer Wellenmutter 134 versehen. Ausgehend vom Wellenendbereich 132 weist die dritte Welle 26 einen Wellenbereich 136 auf, dem sich eine Ringnut 138 anschließt, wobei ein Teil des Wellenbereichs 136 aus der vierten Öffnung 36 herausragt. In der Ringnut 138 ist ein Sprengring 140 aufgenommen. Zwischen der Ringnut 138 und der dritten Öffnung 34 ist ein Absatz 142 vorgesehen, dem sich ein Wellenzapfen 144 anschließt. Auf dem Wellenzapfen 144 ist ein Lagerbereich 146 ausgebildet, der von dem ersten Lager 49 des zweiten Getrieberaumbereichs 24 aufgenommen wird. Auf dem Wellenbereich 136 ist ein zweites Kegelrad 148 gelagert, welches über eine Feder-Nut-Verbindung 150 drehfest mit der dritten Welle 26 verbunden ist. Auf dem zweiten Kegelrad 148 ist ein Lagerbereich 152 ausgebildet, durch den die dritte Welle im zweiten Lager 50 aufgenommen wird. Ferner ist auf dem aus der vierten Öffnung 36 herausragenden Teil des Wellenbereichs 136 eine Riemenscheibe 154 vorgesehen, die ebenfalls über die Feder-Nut-Verbindung 150 mit der dritten Welle 26 drehfest verbunden ist.

Der Wellenzapfen 78 der ersten Welle 20 ist mit einem Kanal 156 versehen, der ausgehend vom Ende des Wellenzapfens 78 eine Getrieberaumöffnung 158 und eine Hohlraumöffnung 160 aufweist.

Die Getrieberaumöffnung 158 ist konzentrisch zur Rotationsachse 18 der ersten Welle 20 angeordnet. Die Hohlraumöffnung 160 des Kanals 156 ist exzentrisch zur Rotationsachse 18 der ersten Welle 20 im Bereich des Hohlraumbodens 98 angeordnet. Die Getrieberaumöffnung 158 ist mit einem Gewinde 161 und einem Bauteil 162, insbesondere ein Verschlussstopfen, versehen, der als Innensechskantschraube ausgebildet ist. Der Bauteil 162 ist mit einer Bohrung 164 versehen. Der Bauteil 162 und die Bohrung 164 sind konzentrisch zur Rotationsachse 18 angeordnet.

Der Gehäusedeckel 48 weist eine Bohrung 166 auf, in der eine Entlüftungseinrichtung 168 eingesetzt ist. Die Entlüftungseinrichtung 168 ist in Form einer Rohrkonstruktion ausgebildet und erstreckt sich in das Innere des zweiten Getrieberaumbereichs 24 hinein (siehe Figur 1). Im Kopf 170 der Entlüftungseinrichtung ist ein Filterelement 172 angeordnet.

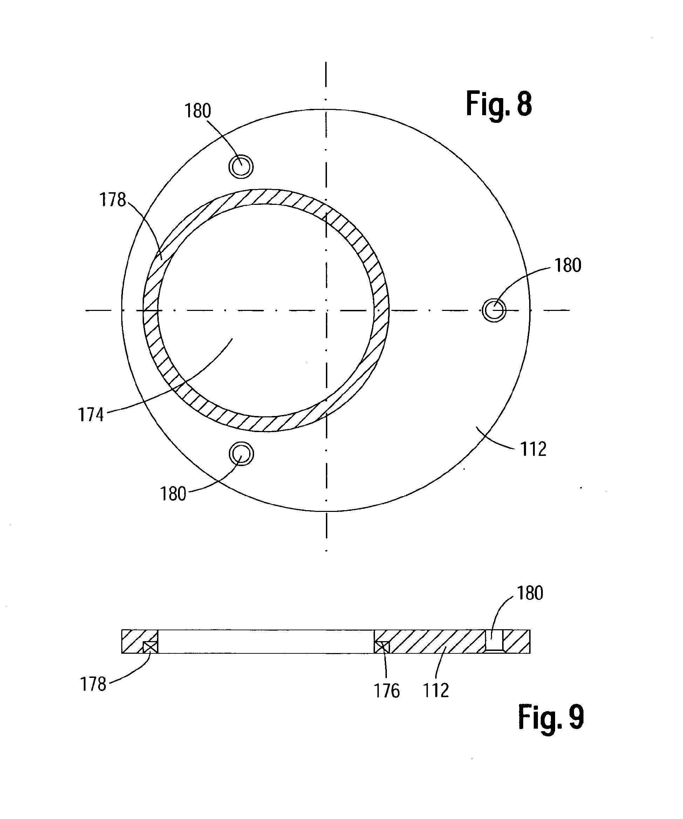

Die zur Fixierung der zweiten Welle 106 angeordnete Platte 112 ist in den Figuren 8 und 9 abgebildet. Die Platte 112 ist entsprechend dem Durchmesser des Wellenendbereichs 64 zylindrisch und konzentrisch zur Rotationsachse 18 ausgebildet und weist eine Öffnung 174 zum Austritt für den Wellenendbereich 113 der zweiten Welle 106 auf. Die Öffnung 174 ist entsprechend der Exzentrizität der zweiten Welle 106 exzentrisch zur Rotationsachse 18 angeordnet. Die Öffnung 174 weist einen Absatz 176 auf, in dem ein dritter Wellendichtring 178 nach außen hin, beispielsweise ein Simmerring, angeordnet ist. Der Wellendichtring 178 dichtet den Bewegungsspalt zwischen der Öffnung 174 und der zweiten Welle 106 ab. Die Platte 112 ist ferner mit Bohrungen 180 versehen, die über den Umfang verteilt angeordnet sind. Bei dem dargestellten Ausführungsbeispiel sind drei Bohrungen 180 vorgesehen. Die Bohrungen 180 dienen zur Verschraubung der Platte 112 mit in dem Wellenendbereich 64 entsprechend eingebrachten Gewindebohrungen 182. Zur Abdichtung der Platte 112 gegenüber der Stirnfläche 111 kann eine Dichtungsschicht (nicht gezeigt) vorgesehen sein, die ein Austritt von Schmiermittel zwischen Platte 112 und Stirnfläche 111 verhindert.

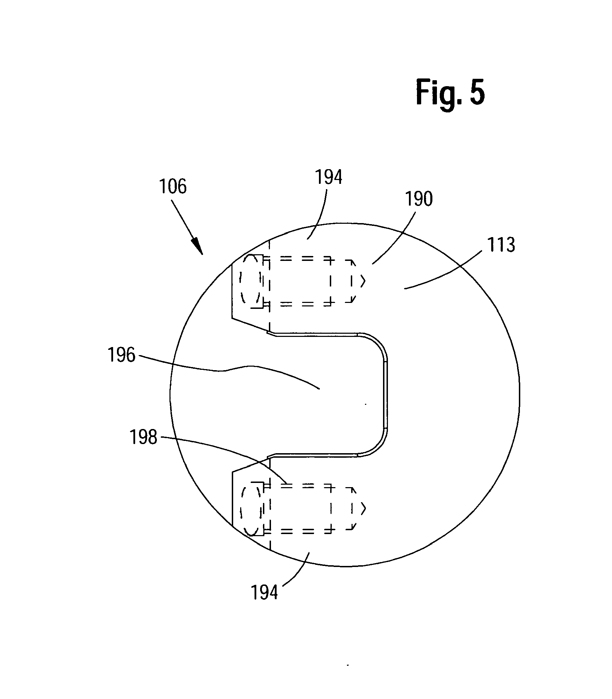

Der Wellenendbereich 113 der zweiten Welle 106 weist Verbindungsmittel 190 auf, die in Form einer radial verbindenden Flanschanordnung ausgebildet sind, wie in den Figuren 4 und 5 dargestellt ist. Die Verbindungsmittel 190 umfassen eine sich axial aus dem Wellenendbereich 113 der zweiten Welle 106 herausragende, u-förmige Erhebung 192, welche zwei sich quer zur Rotationsachse 90 auf der Stirnfläche des Wellenendbereichs 113 erstreckende Schenkel 194 aufweist. Zwischen den Schenkeln 194 ist ein Freiraum 196 ausgebildet. An den Stirnflächen der Schenkel 194 sind Gewindebohrungen 198 vorgesehen, wobei die Stirnflächen der Schenkel 194 mit dem Boden des Freiraums 196 einen Winkel einschließen, der kleiner als 90° ist. Die Stirnfläche des Wellenendbereichs 113 ist mit einer Gewindebohrung 200 versehen.

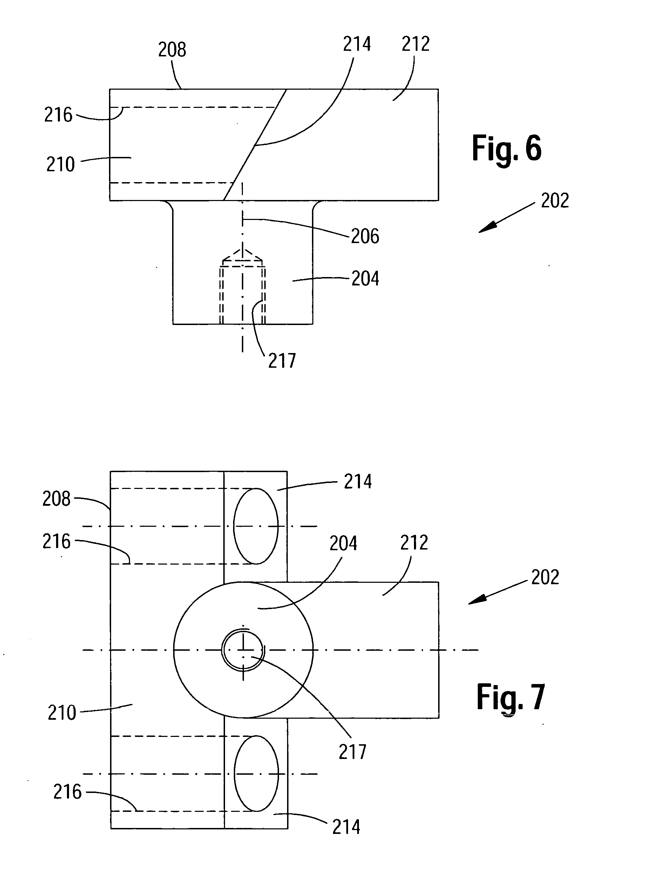

Die Getriebeanordnung 10 ist des Weiteren mit einer Zapfenanordnung 202 versehen, die mit dem Wellenendbereich 113 der zweiten Welle 106 verbunden ist. Die Zapfenanordnung 202 ist detailliert in den Figuren 6 und 7 dargestellt. Die Zapfenanordnung 202 weist einen Zapfen 204 mit einer Zapfenachse 206 und Verbindungsmittel 208 in Form einer radial verbindenden Flanschanordnung auf. Die Verbindungsmittel 208 umfassen eine Platte 210, aus der sich in radialer Richtung zur Zapfenachse 206 ein Steg 212 erstreckt. Die Platte 210 weist eine Höhe auf, die im Wesentlichen der Höhe der u-förmigen Erhebung 192 entspricht. Der Zapfen 204 erstreckt sich axial zur Zapfenachse 206 aus der Platte 210. Der Steg 212 ist derart ausgebildet, dass er im Wesentlichen die Form und die Größe des Freiraums 196 aufweist. Seitlich des Stegs 212 sind Verbindungsflächen 214 ausgebildet, die entsprechend der Stirnflächen der Schenkel 194 angeschrägt sind. Die Platte 210 ist mit Bohrungen 216 versehen, die in Größe und Abstand den Gewindebohrungen 198 angepasst sind. Der Zapfen 204 ist des Weiteren an seiner Stirnfläche mit einer konzentrisch zur Zapfenachse 206 angeordneten Gewindebohrung 217 versehen.

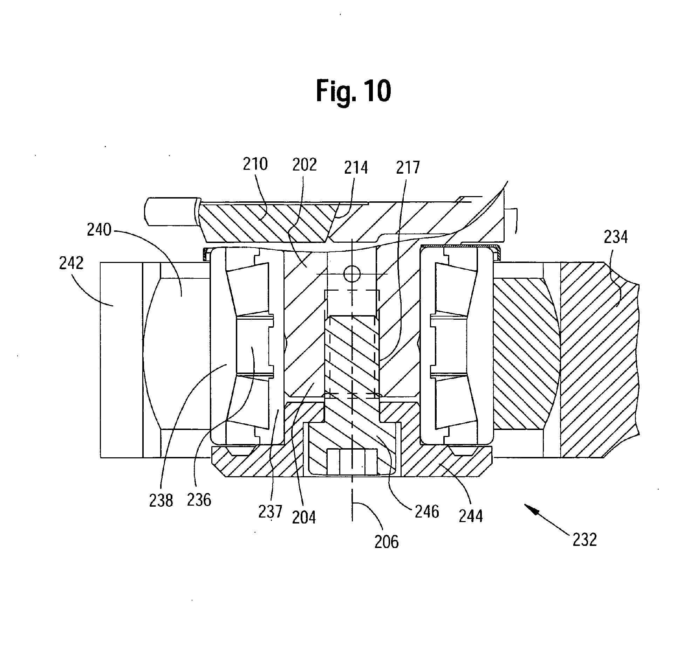

Die Zapfenanordnung 202 bzw. der Zapfen 204 ist mit einer Lageranordnung 232 versehen (siehe Figuren 10), die mit Verbindungsmitteln 234 zum Betreiben eines Schneidwerks (nicht gezeigt) verbunden ist. Die Lageranordnung 232 umfasst ein Wälzlager 236 mit einem inneren Laufring 237, einem äußeren Laufring 238 und einer über ihren Umfang geschlossene Buchse 240, eine über ihren Umfang geschlossene Lagerpfanne 242, wobei die Lagerpfanne 242 die Verbindung zu den Verbindungsmitteln 234 herstellt, eine Befestigungsscheibe 244 und eine Befestigungsschraube 246. Das Wälzlager 236 ist als Rollenlager ausgebildet und wird von dem Zapfen 204 mit seinem inneren Laufring 237 aufgenommen. Von dem äußeren Laufring 238 wird die Buchse 240 aufgenommen. Die Buchse 240 ist in einer Lagerpfanne 242 gelagert. Die Buchse 240 weist eine Außenfläche auf, die radial zur Rotationsachse 206 des Zapfens 204 sphärisch nach außen gekrümmt ausgebildet ist. Die Lagerpfanne 242 weist eine Innenfläche auf die kongruent zur Außenfläche der Buchse 240 radial zur Rotationsachse 206 des Zapfens 204 sphärisch nach innen gekrümmt ausgebildet ist. Die Lagerpfanne 242 weist radial gegenüberliegende Aussparungen (nicht dargestellt) auf, die sich axial zur Zapfenachse 206 entlang der Innenfläche der Lagerpfanne 242 erstrecken. Die Krümmungen der sphärischen Flächen der Buchse 240 bzw. der Lagerpfanne 242 weisen dabei einen Krümmungsradius auf, der dem maximalen Außenradius der Buchse 240 bzw. dem maximalen Innenradius der Lagerpfanne 242 entspricht. Die Aussparungen dienen zum Einführen der Buchse 240 in die Lagerpfanne 242. Das Verbindungsmittel 234 ist in Form einer Führungsstange ausgebildet, die fest mit der Lagerpfanne 242 verbunden bzw. einteilig mit der Lagerpfanne 242 ausgebildet ist. Das Verbindungsmittel 234 wird mittels einer Verbindungsstange und Verschraubungen mit einer Schneidwerksmechanik (nicht gezeigt) verbunden.

Im Folgenden wird kurz auf den Zusammenbau sowie auf die relevanten Vorteile der dargestellten Getriebeanordnung 10 eingegangen.

Ausgehend von dem Getriebegehäuse 16 wird dieses mit dem Hohlrad 60 bestückt und mit dem zweiten Lager 42 für die erste Welle 20 sowie mit dem ersten Wellendichtring 47 versehen. Es folgt das Einsetzen der ersten Welle 20 in den ersten Getrieberaumbereich 22 durch die erste Öffnung 30. Über die zweite Öffnung 32 des zweiten Getrieberaumbereichs 24 wird das mit dem zweiten Lager 40 vormontierte erste Kegelrad 80 über den Wellenzapfen 78 geführt. Durch die Wellenmutter 84 und den Wellenabsatz 76 werden das Kegelrad 80 und das Lager 40 axial verspannt und die erste Welle 20 axial gesichert.

Die zweite Welle 106 wird mit dem ersten Lager 104 und mit dem zweiten Lager 110 vormontiert, wobei das zweite Lager 110 mit dem Sprengring 120 in der Ringnut 118 axial gesichert wird. Die vormontierte zweite Welle 106 wird in den Hohlraum 88 der ersten Welle 20 geführt und über die mit dem dritten Wellendichtring 178 vormontierte Platte 112 axial fixiert.

Die dritte Welle 26 wird dahingehend vormontiert, dass der Wellenzapfen 144 mit dem ersten Lager 49 bestückt wird und das zweite Kegelrad 148 mit dem vormontierten zweiten Lager 50 gegen den auf der dritten Welle 26 in der Ringnut 138 befestigten Sprengring 140 geschoben wird. Anschließend wird die vormontierte dritte Welle 26 über die vierte Öffnung 36 in den zweiten Getrieberaumbereich 24 geführt und das zweite Lager 50 mit dem Sprengring 54 an der Ringnut 56 axial fixiert. Nach einsetzen des zweiten Wellendichtrings 57 wird anschließend die Riemenscheibe 154 über das Wellenende 132 geführt und gegen das zweite Kegelrad 148 gedrückt. Durch die Wellenmutter 134 und den Sprengring 140 werden die Riemenscheibe 154, das zweite Kegelrad 148 axial auf der dritten Welle 26 miteinander verspannt.

Das Verbinden der Verbindungsmittel 190, 208 des Wellenendbereichs 113 und der Zapfenanordnung 202 erfolgt durch Einschieben des Steges 212 in den Freiraum 196 und durch Verschrauben der Platte 210 mit den Schenkeln 194 über die Bohrungen 198 und 216. Durch Verbinden der Verbindungsmittel 190, 208 wird der Zapfen 204 exzentrisch zur Rotationsachse 90 der zweiten Welle 106 fixiert.

Der Zusammenbau der Lageranordnung 232 und des Zapfens 202 erfolgt durch Einführen des Zapfens 202 in den inneren Laufring 237 des Wälzlagers 236. Die Buchse 240 wird quer zur Lagerpfanne 242 in die Aussparungen eingeführt (so dass die Radien der Buchse 240 und der Lagerpfanne 242 senkrecht zueinander stehen), bis der Buchsenmittelpunkt in etwa auf Höhe des Lagerpfannenmittelpunktes liegt. Durch anschließendes Ausrichten der Buchse 240 zur Lagerpfanne 242 (so dass die Radien der Buchse 240 und der Lagerpfanne 242 parallel zueinander stehen) wird die Buchse in eine Stellung gebracht, in der sie durch die Lagerpfanne 242 axial und radial zur Rotationsachse des Zapfens 206 fixiert ist. Die Buchse 240 lässt sich jedoch um eine beliebige durch den Lagerpfannenmittelpunkt verlaufende Rotationsachse, die senkrecht zur Rotationsachse 206 gelegen ist, drehen. Im Anschluss daran wird die Buchse 240 über den äußeren Laufring 238 geschoben und das Wälzlager 236 zusammen mit der Buchse 240 mittels der Befestigungsscheibe 244 und der Befestigungsschraube 246 mit dem Zapfen 204 verbunden. Durch die sphärische Ausbildung der Buchse 240 bzw. der Lagerpfanne 242 wird eine Ausgleichsbewegung der Verbindungsmittel 234 bzw. der Verbindungsstange um eine senkrecht zur Rotationsachse 206 des Zapfens 204 gelegene Achse ermöglicht. Die geschlossene Ausbildung der Buchse 240 und der Lagerpfanne 242 erhöhen die Stabilität und Verschleißfestigkeit der Lageranordnung 232 und vereinfachen den Zusammenbau, da auf herkömmliche Spannvorrichtungen für die Lagerpfanne 242 verzichtet werden kann.

Der Antrieb der Getriebeanordnung 10 erfolgt über die Riemenscheibe 154 an der dritten Welle 26. Über das durch die beiden Kegelräder 80, 148 ausgebildete Winkelgetriebe wird die erste Welle um die Rotationsachse 18 angetrieben. Durch die Rotationsbewegung der ersten Welle 20 wird zum einen eine Rotationsbewegung der zweiten Welle 106 um die Rotationsachse der ersten Welle 20 eingeleitet, zum anderen aber auch eine Eigenrotation der zweiten Welle 106 um die Rotationsachse 90 hervorgerufen, da die zweite Welle 106 über den Verzahnungsbereich 124 durch die Hohlraumöffnung 100 mit dem Hohlrad 60 in Eingriff steht. Der über die Verbindungsmittel 190, 208 mit dem Wellenendbereich 113 der zweiten Welle 106 verbundene Zapfen 204, welcher exzentrisch zur Rotationsachse der zweiten Welle 106 angeordnet ist, erfährt somit eine exzentrische Rotationsbewegung um die Rotationsachse 18 der ersten Welle 20 die von einer exzentrischen Rotationsbewegung um die Rotationsachse 90 der zweiten Welle 106 überlagert ist.

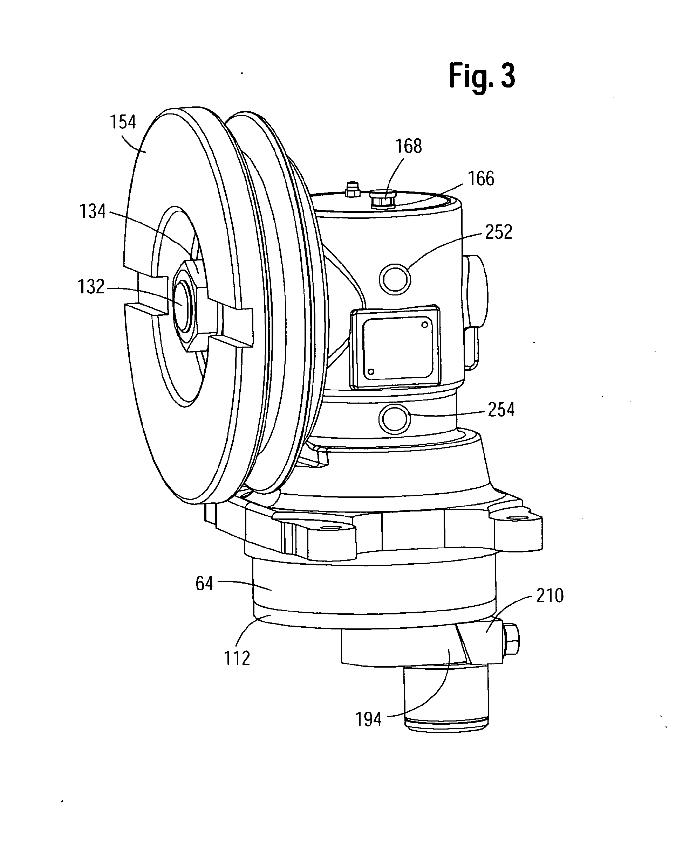

Wie in den Figuren 2 und 3 dargestellt ist, sind am Getriebegehäuse 16 Verschlussstopfen 252, 254 vorgesehen, die entlang der Rotationsachse 18 beabstandet angeordnet sind, wobei ein oberer Verschlussstopfen 252 zum Auffüllen von Schmiermittel bzw. Getriebeöl und ein unterer Verschlussstopfen 254 zum Ablassen von Schmiermittel bzw. Getriebeöl vorgesehen ist. Die Verschlussstopfen 252, 254 können als Schrauben ausgebildet sein, die in das Gehäuse 16 eingeschraubt werden. Die Position des oberen Verschlussstopfens 252 stellt einen Maximalfüllstand für das Schmiermittel bzw. Getriebeöl dar und ist derart gewählt, dass ein Auffüllen de Getriebegehäuses 16 mit Schmiermittel bzw. Getriebeöl bis in den Bereich der dritten Welle 26 ermöglicht wird, hingegen die Position des unteren Verschlussstopfens 254 einen Minimalfüllstand für das Schmiermittel bzw. Getriebeöl darstellt, welcher im gemeinsamen zylindrischen Übergangsbereich 28 angeordnet ist. Durch das in die Getrieberaumöffnung 158 eingesetzte Bauteil 162 bzw. durch die in dem Bauteil 162 vorgesehene Bohrung 164 wird der Durchgangsquerschnitt des Kanals 156 deutlich reduziert. Dadurch, dass die Hohlraumöffnung 160 exzentrisch zur Getrieberaumöffnung 158 bzw. zur Rotationsachse 18 angeordnet ist, entsteht bei Rotation der ersten Welle 20 ein Sog, der das vorhandene Schmiermittel von der Getrieberaumöffnung 158 durch den Kanal 156 zur Hohlraumöffnung 160 befördert. Der durch den Bauteil 162 reduzierte Durchlassquerschnitt des Kanals 156 bewirkt, dass eine reduzierte Menge an Schmiermittel in den Hohlraum 88 gelangt. Durch Anpassen der Bohrung 164 kann die Schmierwirkung auf einfache Weise an die Leistungserfordernisse der Getriebeanordnung angepasst werden, so dass das durch den Kanal geförderte Schmiermittel einer optimierten Menge entspricht.

Die in den Gehäusedeckel 48 eingesetzte Entlüftungseinrichtung 168 dient zur Entlüftung der Getriebeanordnung 10. Sie besitzt den Vorteil gegenüber herkömmlichen Einrichtungen, dass der Rohrabschnitt im Verhältnis zum Durchmesser des Kopfes 170 sehr lang ausgebildet ist. Dadurch kann die Verschmutzung des Filterelements 172 verlangsamt werden, da sich zum einen durch das Rohr aufsteigender Schmiermitteldampf an der Rohrinnenwand absetzen kann, zum anderen aufschäumendes bzw. aufspritzendes Schmiermittel nicht so direkt an den Filter gelangt und diesen verschmutzt.

Alles in allem werden durch die erfindungsgemäßen Ausgestaltungen der Getriebeanordnung die Wartungsintervalle verlängert, die Temperatur- und Druckverhältnisse im Getriebegehäuse 16 deutlich verbessert und ein Montageaufwand maßgeblich reduziert.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Getriebeanordnung, mit einem Getriebegehäuse (16), einem von dem Getriebegehäuse (16) umschlossenen Getrieberaum (12), einer in dem Getriebegehäuse (16) gelagerten ersten Welle (20), einem in der ersten Welle (20) mit seinem Querschnittsschwerpunkt exzentrisch zur Rotationsachse (18) ausgebildeten Hohlraum (88), einer in dem Hohlraum (88) der ersten Welle (20) drehbar gelagerten zweiten Welle (106), die wenigstens einen Verzahnungsbereich (124) und einen axial aus dem Hohlraum (88) der ersten Welle (20) herausragenden Wellenendbereich (113) aufweist, und einer im Getriebegehäuse (16) gelagerten dritten Welle (26), deren Rotationsachse (38) mit einer auf der Rotationsachse (18) der ersten Welle (20) liegenden Ebene einen Winkel einschließt, **dadurch gekennzeichnet, dass** die Getriebeanordnung (10) eine an der ersten Welle (20) drehfest befestigte Platte (112) zur axialen Fixierung der zweiten Welle (106) aufweist, wobei in der Platte (112) eine Öffnung (174) für den Wellenendbereich (113) vorgesehen ist, und dass Öffnungen (30, 36) des Getriebegehäuses (16) sowie die Öffnung (174) der Platte (112) derart mit Schmiermittel abdichtenden Dichtmitteln (47, 57, 178) versehen sind, dass zwischen Getriebegehäuse und erster und dritter Welle (20, 26) bzw. zwischen Platte (112) und zweiter Welle (106) ein Austritt eines sich im Getriebegehäuse (16) befindlichen Schmiermittels verhindert wird, wobei die Platte (112) entsprechend dem Durchmesser des Wellenendbereichs (64) zylindrisch und konzentrisch zur Rotationsachse (18) ausgebildet ist und eine Öffnung (174) zum Austritt für den Wellenendbereich (113) der zweiten Welle (106) aufweist und wobei die Öffnung (174) entsprechend der Exzentrizität der zweiten Welle (106) exzentrisch zur Rotationsachse (18) angeordnet ist.

2. Getriebeanordnung nach Anspruch 1, **dadurch gekennzeichnet, dass** die Platte (112) stirnseitig mit einem Wellenendbereich (64) der ersten Welle (20) verschraubt ist.

3. Getriebeanordnung nach Anspruch 1 oder 2, **dadurch gekennzeichnet, dass** das Getriebegehäuse (16) mit einem oder mehreren entlang der Rotationsachse (18) der ersten Welle (20) angeordneten Verschlussstopfen (252, 254) versehen ist.

4. Getriebeanordnung nach einem der vorhergehenden Ansprüche, **dadurch gekennzeichnet, dass** die Dichtmittel (47, 57, 178) als Wellendichtringe ausgebildet sind.

5. Getriebeanordnung nach einem der vorhergehenden Ansprüche, **dadurch gekennzeichnet, dass** die Getriebeanordnung (10) mit Getriebeöl als Schmiermittel betreibbar ist.

6. Getriebeanordnung nach einem der vorhergehenden Ansprüche, **dadurch gekennzeichnet, dass** ein in einem ersten Lagerbereich (116) der zweiten Welle (106) angeordnetes Lager (110) durch die Platte (112) an der ersten Welle (20) axial fixiert wird.

7. Getriebeanordnung nach einem der vorhergehenden Ansprüche, **dadurch gekennzeichnet, dass** die zweite Welle (106) einteilig ausgebildet ist, wobei die Außendurchmesser einzelner Bereiche (113, 116, 124, 130) der zweiten Welle (106) zum Wellenendbereich (113) hin gleichbleibend oder ansteigend ausgebildet sind.

8. Getriebeanordnung nach einem der vorhergehenden Ansprüche, **dadurch gekennzeichnet, dass** der Verzahnungsbereich (124) mit einer mit dem Getriebegehäuse (16) drehfest verbundenen Verzahnung (60) in Eingriff steht.

9. Getriebeanordnung nach einem der vorhergehenden Ansprüche, **gekennzeichnet durch** ein erstes Lager (49) der dritten Welle (26), in dem diese axial lose gelagert ist, wobei das erste Lager (49) der dritten Welle (26) als Rollenlager, insbesondere Nadellager, ausgebildet ist.

10. Getriebeanordnung nach einem der vorhergehenden Ansprüche, **gekennzeichnet durch** ein zweites Lager (50) der dritten Welle (26), welches axial in Richtung nach außen zum Getriebegehäuse am Getriebegehäuse (16) mit einem Sprengring (54) fixiert ist.

11. Getriebeanordnung nach einem der vorhergehenden Ansprüche, **gekennzeichnet durch** ein auf der dritten Welle (26) angeordnetes Zahnrad (148), welches auf der dritten Welle (26) nur in einer Richtung **durch** einen Sprengring (140) axial fixiert ist.

12. Getriebeanordnung nach einem der vorhergehenden Ansprüche, **gekennzeichnet durch** ein auf der ersten Welle (20) befestigtes Zahnrad (80), welches mit dem auf der dritten Welle (26) befestigten Zahnrad (148) in Eingriff steht, wobei das Zahnrad (80) der ersten Welle (20) in einem ersten Lager (40) der ersten Welle (20) radial zur Rotationsachse (18) der ersten Welle (20) fixiert ist und eine Axialkraft in Bezug auf die dritte Welle (26) ausübt.

13. Getriebeanordnung nach einem der vorhergehenden Ansprüche, **dadurch gekennzeichnet, dass** an einem Getriebegehäusedeckel (48) eine den Getrieberaum (12) mit der Umgebung des Getriebegehäuses (16) verbindende Entlüftungseinrichtung (168) vorgesehen ist.

14. Getriebeanordnung nach einem der vorhergehenden Ansprüche, **dadurch gekennzeichnet, dass** ein Zapfen (204) vorgesehen ist, der sich axial und exzentrisch zur Rotationsachse (90) der zweiten Welle (106) aus dem Wellenendbereich (113) erstreckt.

15. Getriebeanordnung nach einem der vorhergehenden Ansprüche, **dadurch gekennzeichnet, dass** der Zapfen (204) mit einem Wälzlager (236) versehen ist.

16. Getriebeanordnung nach Anspruch 15, **dadurch gekennzeichnet, dass** das Wälzlager (236) von einer Buchse (240) mit einer sphärisch gewölbt ausgebildeten Außenfläche und die sphärisch gewölbt ausgebildete Außenfläche der Buchse (240) von einer Lagerpfanne (242) aufgenommen wird, welche mit einer kongruent zur Außenfläche der Buchse (240) ausgebildeten Innenfläche ausgebildet ist.

17. Getriebeanordnung nach Anspruch 16, **dadurch gekennzeichnet, dass** die Buchse (240) und die Lagerpfanne (242) über den Umfang geschlossen ausgebildet sind und die Lagerpfanne (242) mit radial gegenüberliegenden und sich axial entlang der Innenfläche der Lagerpfanne (242) erstreckenden Aussparungen zum Einsetzen der Buchse versehen ist.

18. Getriebeanordnung nach einem der Ansprüche 16 oder 17, **dadurch gekennzeichnet, dass** die Lagerpfanne (242) für das Wälzlager (236) des Zapfens (204) mit Verbindungsmitteln (234), insbesondere Verbindungsmittel (234) zur Verbindung mit einem Schneidwerk, verbunden ist.

## Claims

1. Transmission assembly, having a transmission housing (16), having a transmission chamber (12) enclosed by the transmission housing (16), having a first shaft (20) which is mounted in the transmission housing (16), having a hollow chamber (88) which is formed, with its cross-sectional centroid eccentric with respect to the axis of rotation (18), in the first shaft (20), having a second shaft (106) and which has at least one toothing region (124) and has a shaft end region (113) which projects axially out of the hollow chamber (88) of the first shaft (20), and having a third shaft (26) which is mounted in the transmission housing (16) and whose axis of rotation (38) encloses an angle with a plane lying on the axis of rotation (18) of the first shaft (20), **characterized in that** the transmission arrangement (10) has a plate (112) which is fastened rotationally conjointly to the first shaft (20) and which serves for fixing the second shaft (106) axially, wherein in the plate (112) there is provided an opening (174) for the shaft end region (113), and **in that** openings (30, 36) of the transmission housing (16) and also the opening (174) of the plate (112) are provided with sealing means (47, 57, 178), which impart a lubricant sealing action, in such a way that a lubricant situated in the transmission housing (16) is prevented from escaping between the transmission housing and the first and third shaft (20, 26) and between the plate (112) and second shaft (106), wherein the plate (112) is formed cylindrically corresponding to the diameter of the shaft end region (64) and concentrically with respect to the axis of rotation (18) and has an opening (174) for the emergence of the shaft end region (113) of the second shaft (106), and wherein the opening (174) is arranged eccentrically with respect to the axis of rotation (18), corresponding to the eccentricity of the second shaft (106).

2. Transmission assembly according to Claim 1, **characterized in that** the plate (112) is screwed frontally to a shaft end region (64) of the first shaft (20).

3. Transmission assembly according to Claim 1 or 2, **characterized in that** the transmission housing (16) is provided with one or more closure plugs (252, 254) arranged along the axis of rotation (18) of the first shaft (20).

4. Transmission assembly according to one of the preceding claims, **characterized in that** the sealing means (47, 57, 178) are formed as shaft sealing rings.

5. Transmission assembly according to one of the preceding claims, **characterized in that** the transmission assembly (10) can be operated with transmission oil as lubricant.

6. Transmission assembly according to one of the preceding claims, **characterized in that** a bearing (110) which is arranged in a first bearing region (116) of the second shaft (106) is fixed axially on the first shaft (20) by the plate (112).

7. Transmission assembly according to one of the preceding claims, **characterized in that** the second shaft (106) is formed in one piece, wherein the outer diameters of individual regions (113, 116, 124, 130) of the second shaft (106) remain constant or increase toward the shaft end region (113).

8. Transmission assembly according to one of the preceding claims, **characterized in that** the toothing region (124) meshes with a toothing (60) connected rotationally conjointly to the transmission housing (16).

9. Transmission assembly according to one of the preceding claims, **characterized by** a first bearing (49) of the third shaft (26), in which first bearing said third shaft is mounted in an axially floating manner, wherein the first bearing (49) of the third shaft (26) is formed as a roller bearing, in particular as a needle-roller bearing.

10. Transmission assembly according to one of the preceding claims, **characterized by** a second bearing (50) of the third shaft (26), which second bearing is fixed to the transmission housing (16) axially in the outward direction with respect to the transmission housing by means of a circlip (54).

11. Transmission assembly according to one of the preceding claims, **characterized by** a gearwheel (148) which is arranged on the third shaft (26) and which is fixed axially on the third shaft (26) only in one direction by a circlip (140).

12. Transmission assembly according to one of the preceding claims, **characterized by** a gearwheel (80) which is fastened on the first shaft (20) and which meshes with the gearwheel (148) fastened on the third shaft (26), wherein the gearwheel (80) of the first shaft (20) is fixed radially with respect to the axis of rotation (18) of the first shaft (20) in a first bearing (40) of the first shaft (20) and imparts an axial force with respect to the third shaft (26).

13. Transmission assembly according to one of the preceding claims, **characterized in that** a ventilation device (168) which connects the transmission chamber (12) to the surroundings of the transmission housing (16) is provided on a transmission housing cover (48).

14. Transmission assembly according to one of the preceding claims, **characterized in that** a journal (204) is provided which extends out of the shaft end region (113) axially and eccentrically with respect to the axis of rotation (90) of the second shaft (106).

15. Transmission assembly according to one of the preceding claims, **characterized in that** the journal (204) is provided with a rolling bearing (236).

16. Transmission assembly according to Claim 15, **characterized in that** the rolling bearing (236) is received by a bushing (240) with a spherically domed outer surface, and the spherically domed outer surface of the bushing (240) is received by a bearing socket (242) which is formed with an inner surface congruent with respect to the outer surface of the bushing (240).

17. Transmission assembly according to Claim 16, **characterized in that** the bushing (240) and the bearing socket (242) are circumferentially closed, and the bearing socket (242) is provided with radially opposed cutouts, which extend axially along the inner surface of the bearing socket (242), for the insertion of the bushing.

18. Transmission assembly according to either of Claims 16 and 17, **characterized in that** the bearing socket (242) for the rolling bearing (236) of the journal (204) is connected to connecting means (234), in particular connecting means (234) for connecting to a cutting unit.

## Revendications

1. Agencement de transmission, comprenant un boîtier de transmission (16), un espace de transmission (12) entouré par le boîtier de transmission (16), un premier arbre (20) monté dans le boîtier de transmission (16), une cavité (88) réalisée dans le premier arbre (20) avec son centre de gravité en section transversale excentré par rapport à l'axe de rotation (18), un deuxième arbre (106) monté à rotation dans la cavité (88) du premier arbre (20), lequel présente au moins une région de denture (124) et une région d'extrémité d'arbre (113) saillant axialement hors de la cavité (88) du premier arbre (20), et un troisième arbre (26) monté dans le boîtier de transmission (16), dont l'axe de rotation (38) forme un angle avec un plan situé sur l'axe de rotation (18) du premier arbre (20), **caractérisé en ce que** l'agencement de transmission (10) présente une plaque (112) fixée de manière solidaire en rotation au premier arbre (20) pour la fixation axiale du deuxième arbre (106), une ouverture (174) pour la région d'extrémité arbre (113) étant prévue dans la plaque (112), et **en ce que** des ouvertures (30, 36) du boîtier de transmission (16) ainsi que l'ouverture (174) de la plaque (112) sont pourvues de moyens d'étanchéité (47, 57, 178) réalisant l'étanchéité avec des moyens lubrifiants de telle sorte qu'entre le boîtier de transmission et le premier et le troisième arbre (20, 26) ou entre la plaque (112) et le deuxième arbre (106) une sortie d'un lubrifiant se trouvant dans le boîtier de transmission (16) soit empêchée, la plaque (112) étant réalisée de manière correspondant au diamètre de la région d'extrémité d'arbre (64) sous forme cylindrique et concentrique par rapport à l'axe de rotation (18) et présentant une ouverture (174) de sortie pour la région d'extrémité d'arbre (113) du deuxième arbre (106) et l'ouverture (174) étant disposée de manière correspondant à l'excentricité du deuxième arbre (106) de manière excentrée par rapport à l'axe de rotation (18).

2. Agencement de transmission selon la revendication 1, **caractérisé en ce que** la plaque (112) est vissée du côté frontal à une région d'extrémité d'arbre (64) du premier arbre (20).

3. Agencement de transmission selon la revendication 1 ou 2, **caractérisé en ce que** le boîtier de transmission (16) est pourvu d'un ou de plusieurs bouchons de fermeture (252, 254) disposés le long de l'axe de rotation (18) du premier arbre (20).

4. Agencement de transmission selon l'une quelconque des revendications précédentes, **caractérisé en ce que** les moyens d'étanchéité (47, 57, 178) sont réalisés sous forme de bagues d'étanchéité d'arbre.

5. Agencement de transmission selon l'une quelconque des revendications précédentes, **caractérisé en ce que** l'agencement de transmission (10) peut être entraîné avec de l'huile de transmission en tant que lubrifiant.

6. Agencement de transmission selon l'une quelconque des revendications précédentes, **caractérisé en ce qu'**un palier (110) disposé dans une première région de palier (116) du deuxième arbre (106) est fixé axialement par la plaque (112) sur le premier arbre (20).

7. Agencement de transmission selon l'une quelconque des revendications précédentes, **caractérisé en ce que** le deuxième arbre (106) est réalisé d'une seule pièce, le diamètre extérieur des régions individuelles (113, 116, 124, 130) du deuxième arbre (106) étant réalisé de manière uniforme ou augmentant par rapport à la région d'extrémité d'arbre (113).

8. Agencement de transmission selon l'une quelconque des revendications précédentes, **caractérisé en ce que** la région de denture (124) est en prise avec une denture (60) connectée directement de manière solidaire en rotation au boîtier de transmission (16).

9. Agencement de transmission selon l'une quelconque des revendications précédentes, **caractérisé par** un premier palier (49) du troisième arbre (26), dans lequel celui-ci est monté de manière libre axialement, le premier palier (49) du troisième arbre (26) étant réalisé sous forme de palier à rouleaux, notamment de palier à aiguilles.

10. Agencement de transmission selon l'une quelconque des revendications précédentes, **caractérisé par** un deuxième palier (50) du troisième arbre (26), qui est fixé axialement dans la direction de l'extérieur vers le boîtier de transmission sur le boîtier de transmission (16) au moyen d'un jonc (54).

11. Agencement de transmission selon l'une quelconque des revendications précédentes, **caractérisé par** une roue dentée (148) disposée sur le troisième arbre (26), laquelle est fixée axialement uniquement dans une direction par un jonc (140) sur le troisième arbre (26).

12. Agencement de transmission selon l'une quelconque des revendications précédentes, **caractérisé par** une roue dentée (80) fixée sur le premier arbre (20), qui est en prise avec la roue dentée (148) fixée sur le troisième arbre (26), la roue dentée (80) du premier arbre (20) étant fixée dans un premier palier (40) du premier arbre (20) radialement par rapport à l'axe de rotation (18) du premier arbre (20), et exerçant une force axiale par rapport au troisième arbre (26).

13. Agencement de transmission selon l'une quelconque des revendications précédentes, **caractérisé en ce qu'**un dispositif de désaérage (168) reliant l'espace de transmission (12) à l'environnement du boîtier de transmission (16) est prévu sur un couvercle de boîtier de transmission (48).

14. Agencement de transmission selon l'une quelconque des revendications précédentes, **caractérisé en ce qu'**un tourillon (204) est prévu, lequel s'étend axialement et de manière excentrique par rapport à l'axe de rotation (90) du deuxième arbre (106) hors de la région d'extrémité d'arbre (113).

15. Agencement de transmission selon l'une quelconque des revendications précédentes, **caractérisé en ce que** le tourillon (204) est pourvu d'un palier à roulement (236).

16. Agencement de transmission selon la revendication 15, **caractérisé en ce que** le palier à roulement (236) est reçu par une douille (240) avec une surface extérieure de courbure sphérique et la surface de courbure sphérique de la douille (240) est reçue par une cavité de palier (242) qui est réalisée avec une surface interne réalisée de manière congruente avec la surface extérieure de la douille (240).

17. Agencement de transmission selon la revendication 16, **caractérisé en ce que** la douille (240) et la cavité de palier (242) sont réalisées sous forme fermée sur la périphérie et la cavité de palier (242) est pourvue d'évidements radialement opposés et s'étendant axialement le long de la surface interne de la cavité de palier (242) pour l'insertion de la douille.

18. Agencement de transmission selon l'une quelconque des revendications 16 ou 17, **caractérisé en ce que** la cavité de palier (242) pour le palier à roulement (236) du tourillon (204) est connectée à des moyens de connexion (234), en particulier des moyens de connexion (234) pour la connexion à un outil de coupe.
